**Europäisches Patentamt**

**European Patent Office**

**Office européen des brevets**

(19)

(11) Veröffentlichungsnummer: **0 183 019 B1**

(12) **EUROPÄISCHE PATENTSCHRIFT**

(45) Veröffentlichungstag der Patentschrift:
**28.12.88**

(51) Int. Cl.⁴: **B 60 H 1/00**

(21) Anmeldenummer: **85112734.0**

(22) Anmeldetag: **08.10.85**

(54) **Steuergerät für Heizungs-, Klima- und Lüftungsanlagen in Kraftfahrzeugen.**

(30) Priorität: **23.10.84 DE 3438833**

(43) Veröffentlichungstag der Anmeldung:
**04.06.86 Patentblatt 86/23**

(45) Bekanntmachung des Hinweises auf die Patenterteilung:
**28.12.88 Patentblatt 88/52**

(84) Benannte Vertragsstaaten:
**AT BE DE FR GB IT NL SE**

(56) Entgegenhaltungen:
**EP-A- 0 087 084**
**EP-A- 0 097 876**
**EP-A- 0 097 878**
**DE-A- 1 605 896**

(73) Patentinhaber: **Siemens Aktiengesellschaft Berlin und München, Wittelsbacherplatz 2, D-8000 München 2 (DE)**

(72) Erfinder: **Hildebrand, Reinhard, Hauptstrasse 11, D-8621 Redwitz (DE)**
Erfinder: **Waldmann, Bernd, Innerer Ring 40, D-8640 Kronach (DE)**

ACTORUM AG

**Beschreibung**

Die Erfindung betrifft ein Steuergerät gemäss dem Oberbegriff des Patentanspruches.

Bei diesem aus der EP-A-0 097 878 bekannten Steuergerät aus Kunststoff für Heizungs- und Lüftungsanlagen in Kraftfahrzeugen mit einem Stellhebel und einem Betätigungshebel ist der Stellhebel drehbar am Betätigungshebel gelagert. Der Führungsbolzen wird in einer Führungsnut geführt. Ein Bowdenzug ist in dem drehbar am Betätigungshebel gelagerten Stellhebel eingehängt.

Ferner kann in Kraftfahrzeugen gemäss einer bekannten Vorrichtung (DE-A-1 655 102) eine Regeleinrichtung mittels eines Bowdenzuges betätigt werden, wobei für die zwangsläufige Übertragung der Stellbewegung zwischen dem Betätigungshebel und dem Befestigungspunkt des Bowdenzuges eine Hebelvorrichtung vorgesehen ist, die zwei Teile enthält, nämlich ein um eine feste Achse schwenkbares Teil, das über eine Gleit- und gegebenenfalls Schwenkverbindung mit einem weiteren Teil verbunden ist. Der Befestigungspunkt des Bowdenzuges ist an einem der beiden Teile vorgesehen. Der Betätigungshebel ist an dem anderen Teil angebracht. Es sind die Betätigungskräfte entweder nicht über den gesamten Hub gleichmässig und demzufolge keine gleichmässig leichte Bewegung des Stellhebels, möglich oder es beruht der Übergang vom Stellzum Betätigungshebel auf dem Prinzip der Linienführung, woraus ein erhöhter Verschleiss resultiert.

Gemäss der DE-A-2 852 452 ist der Stellhebel, der in Lüftungsanlagen vorn in Kraftfahrzeugen angebracht ist, beidseitig zwischen sich in Stellrichtung erstreckenden Führungsflächen geführt. Die technische Gestaltung der Vorrichtung ist sehr aufwendig und besteht aus vielen Einzelteilen.

Gemäss einer weiteren bekannten Ausführung, DE-A-3 206 288 ist zwischen dem (den) Stellhebel(n) und dem (den) Betätigungshebel(n) ein drehbar gelagerter Zwischenhebel angeordnet, wodurch die kreisförmige Bewegung des Stellhebels und die geradlinige oder leicht gekrümmte Bewegung des (der) Betätigungshebel kombiniert werden. Es entsteht eine einwandfreie Parallelführung des (der) Betätigungshebel in der Führungsschiene. In der Strecklage des Zwischenhebels kann eine Selbstverriegelung der Kinematik erreicht werden.

Der Erfindung liegt die Aufgabe zugrunde, den Weg eines Betätigungshebels in den Weg eines Übertragungselementes umzusetzen, das ein Stellglied, beispielsweise eine Luftklappe, oder einen elektrischen Widerstand ansteuert. Dabei soll die Selbstverriegelung der Gesamtkinematik mindestens in einer Endstellung beim Wegfall des Zwischenhebels erreicht werden. Der Stellhebel soll nicht in einer festen Achse gelagert sein. Der Wegeverlauf des Übertragungselementes soll gegenüber dem Weg des Betätigungshebels je nach Anforderung variiert werden können.

Diese Aufgabe wird durch ein Steuergerät gelöst, das entsprechend dem Kennzeichen des Patentanspruches ausgebildet ist.

Die Führungsnut kann in den Grundkörper integriert sein. Der Verlauf der Führungsnut ist so ausgelegt, dass die vorgegebenen Stellwege über den Führungsbolzen und das Übertragungselement erfüllt sind.

Der Bowdenzug kann an einem Bowdenzugklips befestigt sein und an dem Grundkörper drehbar gelagert angebracht sein.

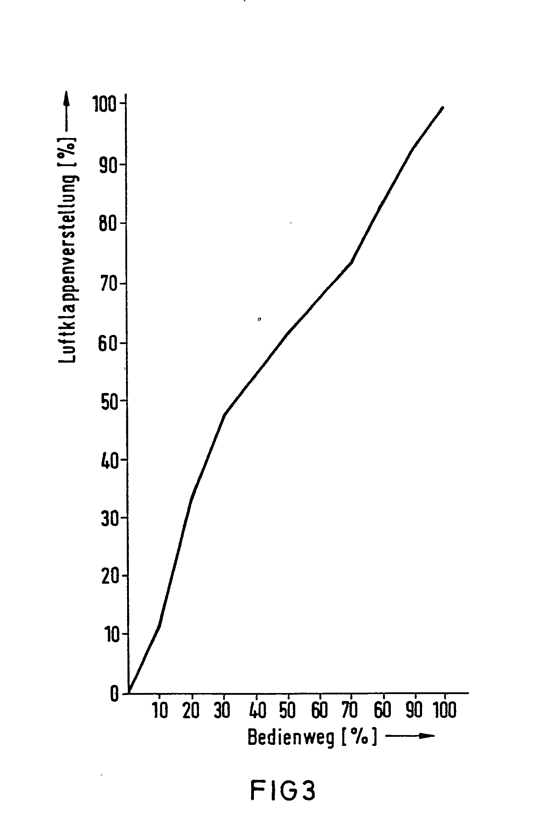

Mit einer Ausführung gemäss der Erfindung kann die Führungsnut variiert werden und es ist beispielsweise für die Heizungskennlinie ein progressiver Bewegungsverlauf gemäss der Kennlinie nach Figur 3 des Übertragungselementes möglich. Dies und der Effekt der Selbstverriegelung sind besonders vorteilhaft. Schliesslich ist die kleinere Bautiefe raummässig günstig. Der Einsatz einer kleineren Anzahl an Bauteilen – Einsparung eines Zwischenhebels – senkt vor allem die Montagekosten.

Die Selbstverriegelung der Kinematik in mindestens einer Endstellung wird erreicht:

1. Durch die Abstimmung zwischen dem Bowdenzug und dem Stellhebel. Der Winkel $\alpha$ liegt zwischen 8° – 90°.

2. Durch die Abstimmung zwischen dem Stellweghebel und dem Betätigungshebel. Der Winkel $\beta$ liegt zwischen 10° – 45°.

3. Durch die Abstimmung zwischen der Führungsnut und dem Betätigungshebel. Der Winkel $\gamma$ liegt zwischen 0° – 45°.

Der Grundkörper und die übrigen Bauteile des Steuergerätes können aus einem beliebigen Kunststoff bestehen. Besonders geeignet sind Acrylnitril-Butadien-Styrol-Copolymere (ABS), Polyamide glasfaserverstärkt (PA 6–GV), Polyphenylenoxid (PPO), Polyoxymethylen (POM), Polypropylen glasfaserverstärkt (PP-GV).

Die Erfindung wird anhand der Zeichnung, die ein Ausführungsbeispiel enthält, näher erläutert.

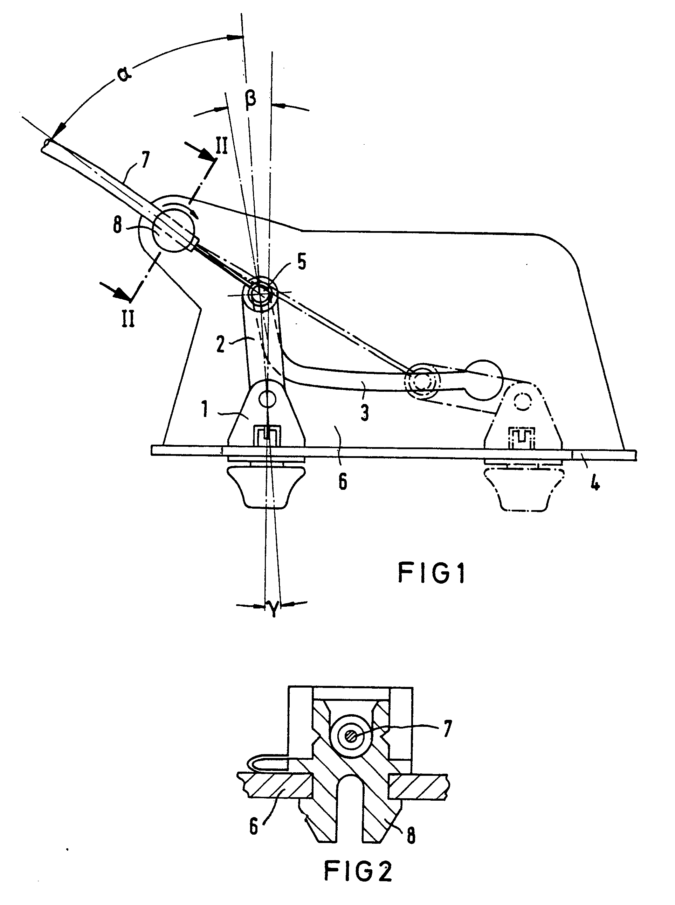

Figur 1 zeigt ein Steuergerät, in Draufsicht bestehend aus einem Grundkörper 6 aus Kunststoff, in dessen Führungsbahn 4 der Betätigungshebel 1 geführt wird. Der durch den Betätigungshebel betätigte Stellhebel 2 weist einen Führungsbolzen 5 auf, der in der Führungsnut 3 geführt wird. Der Bowdenzug 7 ist in den Stellhebel 2 eingehängt und mittels des am Grundkörper 6 drehbar gelagerten Bowdenzugklipses 8 am Grundkörper 6 befestigt. $\alpha$ ist der Winkel zwischen dem Bowdenzug 7 und dem Stellhebel 2. $\beta$ ist der Winkel zwischen der Führungsnut 3 und dem Betätigungshebel 1. $\gamma$ ist der Winkel zwischen dem Stellhebel 2 und dem Betätigungshebel 1.

Figur 2 zeigt im Schnitt einen Bowdenklips 8, der in den Grundkörper 6 eingerastet ist. Mit 7 ist wiederum der Bowdenzug bezeichnet.

In Figur 3 ist als Beispiel eine Kennlinie für eine erfindungsgemässe Vorrichtung aufgezeichnet. Auf der Abszisse ist der Bedienweg in Prozenten, auf der Ordinate die Klappenverstellung ebenfalls in Prozenten eingetragen. Die in dem Diagramm eingezeichnete Kurve zeigt den Zusammenhang zwischen Bedienweg und Klappenverstellung. Bei der erfindungsgemässen Ausführung wird eine stufenlose Steuerung beispielsweise der Heizleistung oder der Luftzufuhr erreicht.

**Patentanspruch**

Steuergerät aus Kunststoff für Heizungs-, Klima- und Lüftungsanlagen in Kraftfahrzeugen mit einem am Betätigungshebel (1) drehbar gelagerten Stellhebel (2) in welchen ein Bowdenzug (7) eingehängt ist und einem in einer Führungsnut (3) geführten Führungsbolzen (5), dadurch gekennzeichnet, dass der Führungsbolzen (5) in den Stellhebel (2) integriert ist und der Bowdenzug (7) an einem Bowdenzugklips (8) befestigt und an dem Grundkörper (6) drehbar gelagert ist.

**Revendication**

Dispositif de commande en matière plastique pour des installations de chauffage, de climatisation et de ventilation dans des véhicules automobiles, comportant un levier de réglage (2), qui est monté rotatif sur un levier de manœuvre (1) et auquel est accroché un câble Bowden (7), et un axe de guidage (5) guidé dans une rainure de guidage (3), caractérisé par le fait que l'axe de guidage (5) est intégré dans le levier de réglage (2) et le câble Bowden (7) est fixé à une pince Bowden (8) et est monté rotatif sur le corps de base (6).

**Claim**

Control device made of plastics material for heating, air-conditioning and ventilating installations in motor vehicles, having an adjusting lever (2), which is pivoted on the actuating lever (1) and in which a Bowden cable (7) is suspended, and a guide bolt (5) guided in a guide groove (3), characterised in that the guide bolt (5) is integrated in the adjusting lever (2) and the Bowden cable (7) is secured to a Bowden cable clip (8) and pivoted on the basic body (6).

FIG 1

FIG 2

5

EP 0 183 019 B1

2/2

FIG 3